# EUROPÄISCHE PATENTSCHRIFT

(11) **EP 2 765 050 B1**
(45) Veröffentlichungstag und Bekanntmachung des Hinweises auf die Patenterteilung: **24.06.2015**
(21) Anmeldenummer: 13000695.0
(22) Anmeldetag: 09.02.2013
(51) Int. Cl.: B61D 3/10, B61F 5/24

(54) **Im Dachbereich zweier gelenkig miteinander verbundener Fahrzeugteile angeordnete Vorrichtung zur Begrenzung der Nickbewegung der Fahrzeugteile relativ zueinander**
Device in the roof area of two vehicle sections with a jointed connection for limiting the angle of the vehicle sections relative to each other
Dispositif agencé dans la zone de toit de deux éléments de véhicule reliés de manière articulée, destiné à la limitation du mouvement de tangage des éléments de véhicule les uns par rapport aux autres

(43) Veröffentlichungstag der Anmeldung: 13.08.2014
(73) Patentinhaber: Hübner GmbH & Co. KG, 34123 Kassel (DE)
(72) Erfinder: Richter, Olaf, 4323 Malsfeld-Beiseförth (DE)
(74) Vertreter: Walther, Walther & Hinz GbR

(56) Entgegenhaltungen:
- DE-C1- 4 446 282

## Beschreibung

Die Erfindung betrifft eine im Dachbereich zweier gelenkig miteinander verbundener Fahrzeugteile angeordnete Vorrichtung zur Begrenzung der Wank- und/oder Nickbewegung der Fahrzeugteile relativ zueinander, insbesondere eines Schienenfahrzeugs, wobei die Vorrichtung mindestens zwei Konsolen umfasst, wobei jeweils mindestens eine Konsole im Dachbereich eines Fahrzeugteils angeordnet ist, wobei die mindestens zwei Konsolen durch einen Kuppelarm miteinander verbunden sind.

Eine derartige Vorrichtung ist aus DE 44 46 282 C1 bekannt Gelenkverbindungen zwischen verbundenen Fahrzeugteilen sind hinreichend bekannt. So ist insbesondere bekannt, dass das untere Gelenklager sämtliche Kräfte aufnehmen muss, die sowohl in radialer als auch in axialer Richtung auftreten. Das heißt, dass dieses untere Gelenklager der Übertragung solcher Kräfte dient, wie sie als solche bei Kurvenfahrten auftreten, sowie der Schub- und Zugkräfte beim Bremsen bzw. beim Ziehen eines derartigen Gelenkfahrzeugs.

Gelenkfahrzeuge erfahren allerdings darüber hinaus eine Vielzahl von Krafteinwirkungen, die in einer ebenfalls hohen Zahl aus Relativbewegungen der Fahrzeugteile zueinander resultieren. So sind hier zu nennen Bewegungseinflüsse, wie sie auftreten, wenn ein solches Fahrzeug um eine Kurve fährt, aber auch Bewegungen der Fahrzeugteile relativ zueinander, wenn ein derartiges Fahrzeug durch eine Bodenwelle oder über eine Kuppe fährt. Neben derartigen Nickbewegungen entstehen auch sogenannte Wankbewegungen der Fahrzeugteile relativ zueinander, wenn die Fahrzeugteile um ihre Längsachse relativ zueinander verdreht werden. Gleichfalls entstehen Versatzbewegungen, wenn ein aus mehreren Fahrzeugteilen bestehendes Schienenfahrzeug z. B. über eine S-förmige Weiche fährt.

Darüber hinaus ist sicherzustellen, dass insbesondere bei schienengebundenen Fahrzeugen die Hüllkurve des Fahrzeugs relativ klein bleibt. Unter Hüllkurve versteht man den vom Fahrzeug insgesamt benötigten radialen Raum während des Auftretens der Fahrbewegungen des Fahrzeugs. Insbesondere extreme Wankbewegungen der Fahrzeugteile relativ zueinander bewirken demzufolge eine große Hüllkurve. Eine solche große Hüllkurve ist insofern unerwünscht, als dann wesentlich mehr Raum für das Fahrzeug auf dem Schienenweg bereitgestellt werden muss. Die Bereitstellung eines großen Raumes für die Fahrbewegung des Fahrzeugs ist entsprechend teuer, was sich insbesondere beim Bau von U-Bahnen bemerkbar macht.

Um Wankbewegungen der Fahrzeugteile relativ zueinander zu vermeiden, ohne dass besondere Maßnahmen an den Fahrzeugteilen selbst getroffen werden müssen, ist aus der EP 0 983 931 B1 ein im Bereich der Decke angeordnetes nach Art eines Scharnierbandes ausgebildetes Scherengestell bekannt, wobei die Enden des Scharnierbandes gelenkig mit dem einen bzw. auch dem anderen Fahrzeug verbindbar sind. Durch die Anordnung des Scherengestells quer zur Längsachse des Fahrzeugs wird erreicht, dass Wankbewegungen vermieden werden, hingegen Nickbewegungen möglich sind.

Nun sind allerdings vielgliedrige, insbesondere schienengebundene Gelenkfahrzeuge bekannt, wobei lediglich einzelne Fahrzeugteile über ein Drehgestell verfügen. Das heißt, dass beispielsweise bei einem 5-gliedrigen Fahrzeug das vordere, das hintere und das mittige Fahrzeugteil über jeweils ein Drehgestell verfügen. Die beiden dazwischen liegenden Fahrzeugteile sind als Sänften ausgebildet, und werden von den benachbarten Fahrzeugteilen mit dem jeweiligen Drehgestell getragen. Solche Fahrzeuge müssen, um ein Zusammenklappen zu verhindern, im Wesentlichen starr miteinander verbunden sein. Allerdings sind mehrere solcher Fahrzeugteile untereinander dennoch derart miteinander verbunden, dass Nickbewegungen zwischen den Fahrzeugteilen möglich sind, da anderenfalls das Durchfahren von Senken oder das Überfahren von Kuppen nicht möglich wäre.

In diesem Zusammenhang ist aus der EP 1 038 761 B1 bekannt, im Deckenbereich zweier gelenkig miteinander verbundener Fahrzeugteile ein Drehgelenk anzuordnen, wobei an dem einen Fahrzeugteil ein Arm vorgesehen ist, dessen Ende durch eine Klaue verdrehbar erfassbar ist. Die Klaue weist zwei winklig zueinander angeordnete Lenkerarme zur Verbindung mit dem anderen Fahrzeugteil auf. Wesentlich hierbei ist, dass die beiden Gelenkpunkte, also sowohl das Gelenk im Dachbereich als auch das Gelenk im Bodenbereich unmittelbar fluchtend übereinander liegen. Insofern ist des Weiteren vorgesehen, dass die beiden Lenkerarme in ihrer Länge verstellbar sind. Durch eine Verbindung nach dem Stand der Technik gemäß der zuvor genannten EP 1 038 761 B1 wird in Verbindung mit einem am Boden angeordneten Kugelgelenk zwischen zwei gelenkig miteinander verbundenen Fahrzeugteilen, wobei das Kugelgelenk drei Freiheitsgrade für die Drehbewegung ermöglicht, aber in Z-Richtung gesperrt ist, erreicht, dass solche Fahrzeugteile eine Nickbewegung relativ zueinander nicht zulassen. Auch Wankbewegungen werden mithilfe dieser Vorrichtung im Wesentlichen nicht zugelassen. Vielmehr geht man davon aus, dass die Fahrzeugteile bzw. die Karosserien derart elastisch sind, dass diese die auftretenden Wank- und auch Nickbewegungen aufnehmen.

Wie bereits zu eingangs erläutert, sollen bei schienengebundenen Fahrzeugen, die in obiger Art und Weise ausgebildet sind, Bewegungen zwischen den Fahrzeugteilen im Wesentlichen ausgeschlossen sein. Zwischenzeitlich hat man allerdings erkannt, dass aus Gründen der Stabilität die Karosserie eines derartigen Fahrzeugteils relativ steif gestaltet sein muss. Wenn die Karosserie der Fahrzeugteile derart steif ist, und insbesondere dann, wenn ein solches Fahrzeugteil bis zur Grenze belastet ist, also die Federn auf Block sind und Wankbewegungen nicht durch die Karosserie selbst aufgefangen werden können, dass dann die Wankbewegungen sich bis auf das Drehgestell übertragen. Insbesondere in solchen ungünstigen Situationen besteht dann die Gefahr, dass die Radsätze des Drehgestells einseitig entlastet werden, mit der Gefahr der Entgleisung des Fahrzeugs bzw. von Fahrzeugteilen. Diese Gefahr besteht umso mehr, wenn die Schienen bzw. auch das Schienenbett stark verschlissen ist, wenn also beispielsweise die Schienen zu beiden Seiten wechselseitig unterschiedlich hoch verlaufen, sodass dann ein solcher Zug Verwindungen aus dem Gleisbett aufnehmen muss. Insbesondere bei den bereits zuvor erwähnten Schienenzügen, bei denen die Fahrzeugteile am vorderen und am hinteren Ende über ein Drehgestell verfügen, das mittige Fahrzeugteil ebenfalls ein Drehgestell aufweist, und zwischen den ein Drehgestell aufweisenden Fahrzeugteilen jeweils ein Sänftenteil angeordnet ist, besteht dann die Gefahr, dass einer der Spurkränze aus den Schienen gehoben wird. An anderer Stelle wurde bereits darauf hingewiesen, dass man bislang davon ausgegangen ist, dass Wankbewegungen über die Karosserie des Schienenfahrzeugs aufgenommen werden können. Insbesondere bei Fahrten von Zügen in Gleisbetten, die stark verschlissen sind, hat sich zudem herausgestellt, dass selbst wenn die Züge nicht entgleisen, die Karosserien aufgrund der einwirkenden starken Torsionskräfte Schaden nehmen bzw. bereits in kurzer Zeit "weich" werden.

In diesem Zusammenhang ist aus der DE 10 2004 014 903 A1 bekannt, zwischen zwei Fahrzeugteilen eines schienengebunden Fahrzeugs im Deckenbereich eine Vorrichtung vorzusehen, die Wankbewegungen begrenzt zulässt. Aus der DE 10 343 536 A1 ist ebenfalls eine Vorrichtung zur Begrenzung der Wankbewegung zwischen zwei Fahrzeugteilen bekannt.

Im Einzelnen umfasst eine solche im Deckenbereich angeordnete Vorrichtung einen Arm zur Verbindung der beiden Fahrzeugteile miteinander, wobei der Arm durch jeweils eine vertikale Achse schwenkbar von den Fahrzeugteilen aufnehmbar ist, wobei eine begrenzte Wankbewegung zugelassen wird. Nachteilig hierbei ist allerdings, dass die Begrenzung der Wankbewegung abrupt einsetzt.

Aus der DE 10 2006 013 404 B4 ist eine weitere Vorrichtung zur Begrenzung der Wankbewegung zwischen Fahrzeugteilen eines Schienenfahrzeugs bekannt, die sich im Einsatz in der Praxis durchaus bewährt hat, die allerdings relativ kompliziert in ihrem Aufbau und insofern verhältnismäßig teuer ist. Gleiches gilt für den Nick- und Wankbegrenzer, der aus der EP 2 500 234 bekannt ist.

Die der Erfindung zugrunde liegende Aufgabe besteht demzufolge darin, ausgehend von im Dachbereich zweier gelenkig miteinander verbundener Fahrzeugteile eines Schienenfahrzeugs dort eine Vorrichtung zur Begrenzung der Nick- und/oder Wankbewegung der Fahrzeugteile relativ zueinander vorzusehen; eine solche Vorrichtung soll relativ einfach und damit preiswert zu gestalten sein, ohne dass Einschränkungen hinsichtlich der Funktionalität zu befürchten sind.

Zu Lösung der Aufgabe wird erfindungsgemäß vorgeschlagen, dass mindestens eine der Konsolen nach Art einer Blattfeder ausgebildet ist. Blattfedern sind insbesondere aus dem Automobilbau bekannt; sie können eine progressive oder auch degressive Kennlinie aufweisen. Durch die Verwendung von Konsolen, die nach Art einer Blattfeder ausgebildet sind, wird die Möglichkeit zur gedämpften Einleitung von Kräften eröffnet, die bei Wank- und Nickbewegungen der beiden gelenkig miteinander verbundenen Fahrzeugteile auftreten. Hierbei wird durch die nach Art einer Blattfeder ausgebildeten mindestens einen Konsolen bei insbesondere progressiver Kennlinie diese Konsole schlussendlich auch eine Begrenzung des Weges der Auslenkung der Fahrzeugteile relativ zueinander eröffnet. Blattfedern sind denkbar simpel in der Ausbildung und insofern auch in der Herstellung besonders preiswert.

Vorteilhafte Merkmale und Ausgestaltungen zu der Erfindung ergeben sich aus den Unteransprüchen.

So ist insbesondere vorgesehen, mindestens jeweils eine Konsole quer zur Mittellängsachse der Fahrzeugteile versetzt zu der anderen Konsole an dem jeweiligen Fahrzeugteil anzuordnen. Das bedeutet, dass die zwei einander gegenüberliegenden an den jeweiligen Wagenkästen der Fahrzeugteile angeordneten Konsolen einen vorbestimmbaren Abstand quer zur Längsachse der Fahrzeugteile zueinander aufweisen. Die beiden Konsolen, von denen mindestens eine nach Art einer Blattfeder ausgebildet ist, sind durch den Kuppelarm miteinander verbunden. Der Kuppelarm ist starr ausgebildet, aber in seiner Länge veränderbar einstellbar. Durch die versetzte Anordnung der Konsolen zueinander sind somit nicht nur Wankbewegungen zwischen den beiden Fahrzeugteilen begrenzt übertragbar, sondern auch Nickbewegungen. Parallel zu der Begrenzung der entsprechenden Bewegung erfolgt aufgrund der federnden Ausbildung der Konsolen als Blattfedern auch eine sanfte Einleitung der bei Wank- und Nickbewegungen auftretenden Kräfte in die Wagenkästen der gelenkig miteinander verbundenen Fahrzeugteile.

Es wurde bereits darauf hingewiesen, dass Blattfedern eine progressive oder auch eine degressive Kennlinie aufweisen können, bzw. auch eine Kombination von beidem. Um die nach Art einer Konsole ausgebildete Blattfeder mit einer progressiven oder einer degressiven Kennlinie auszustatten, ist vorgesehen, dass die einzelnen Blattfedern zur Bildung eines Blattfederpaketes mehrere Blattfederelemente aufweisen. Je nach Anordnung der Blattfederelemente kann die Federkennlinie der Blattfeder progressiv oder degressiv ausgestaltet sein.

Im Einzelnen ist in Bezug auf die Konsole vorgesehen, dass diese mindestens einen Schenkel aufweist, vorzugsweise zeigt die als Blattfeder ausgebildete Konsole allerdings zwei Schenkel, die an ihren freien Enden miteinander verbunden sind. Insofern kann eine Konsole mit zwei Schenkeln beispielsweise domartig ausgebildet sein, wobei die beiden Schenkel, deren freien Enden aneinander anliegen, miteinander verbunden sind. Das heißt, dass bei einem Kraftangriff quer zu den Schenkeln einer solchen domartig ausgebildeten Konsole die Schenkel in Bezug auf ihre Stellung zur Kraftangriffsrichtung unterschiedlich ausgelenkt werden. Im Folgenden wird zur Erleichterung des Verständnisses davon die Rede sein, dass der eine Schenkel auf Druck und der andere Schenkel auf Zug beansprucht wird bei gleicher Kraftangriffsrichtung. Durch Ausrüstung des auf Druck ausgebildeten Schenkels mit mehreren Blattfederelementen zur Gestaltung eines Blattfederpaketes kann diese Konsole bei Kraftangriffen in einer Richtung eine progressive Federkennlinie aufweisen, in der anderen Richtung kann diese Kennlinie ebenfalls progressiv verlaufen, allerdings eine geringere Steigung aufweisen. Hieraus wird deutlich, dass durch das Prinzip der Verwendung von Blattfedern als Konsolen zur stufenlosen oder sanften Einleitung von Kräften in die Wagenkästen der Fahrzeugteile bei Auftreten von Wank- und Nickbewegungen, auf einfache Art und Weise eine individuelle Ausgestaltung der Federkennlinie der jeweiligen Konsole ermöglicht wird. Die Ausgestaltung der Federkennlinie erfolgt in Abhängigkeit u. a. der Kraftangriffsrichtung und der mechanischen Gegebenheiten, insbesondere der Festigkeit der Wagenkästen einerseits, und der Einhaltung bestimmter äußerer Randbedingungen wie z. B. der vorgegebenen Hüllkurve andererseits. Das heißt, dass die Konsolen nach Art von Bausätzen hergestellt werden können, wobei die einzelnen Konsolen in Abhängigkeit der Größe der Kräfte, der gewünschten Federwege und der Kraftangriffsrichtung individuell ausgestaltet werden können. Dies geschieht, wie dies bereits an anderer Stelle erläutert worden ist, einfach dadurch, dass die Blattfedern als Blattfederpakete ausgestaltet werden können mit einerseits einer unterschiedlichen Anzahl von Blattfederelementen und andererseits einer unterschiedlichen Anordnung der Blattfederelemente zueinander.

Nach einem besonderen Merkmal der Erfindung ist vorgesehen, dass die mindestens eine Konsole einen Dämpfer aufweist, vorzugsweise allerdings beide Konsolen. Hieraus wird deutlich, dass durch den Einsatz eines Dämpfers z. B. eines Kolbenzylinderdämpfers nach Art eines Stoßdämpfers, die Bewegung gegen die Kraft der als Blattfeder ausgebildeten Konsole gedämpft erfolgen soll, mithin nicht die Gefahr des Übergangs in die Resonanz besteht.

Im Einzelnen ist in diesem Zusammenhang vorgesehen, dass der Dämpfer mit seinem einen Ende im Bereich des freien Endes der Konsole und mit seinem anderen Ende an dem Fahrzeugteil angelenkt ist, das die Konsole aufnimmt. Das heißt, dass die Dämpfung zwischen Konsole und Fahrzeugteil bzw. Wagenkasten des Fahrzeugteiles erfolgt.

Anhand der Zeichnungen wird die Erfindung nachstehend beispielhaft näher erläutert.

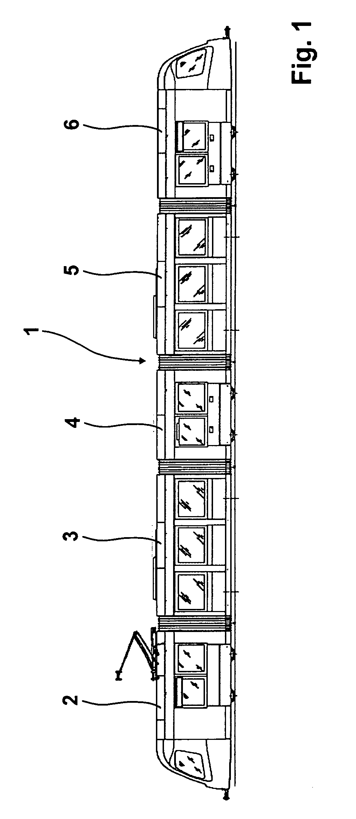

- Fig. 1: zeigt schematisch ein aus mehreren Teilen bestehendes Schienenfahrzeug;
- Fig. 2: zeigt die Vorrichtung zur Begrenzung der Wank- und/oder Nickbewegung der Fahrzeugteile in einer ersten Ausgestaltung;
- Fig. 3: zeigt eine Darstellung gemäß Fig. 2 in einer zweiten Ausgestaltung.

Das mit 1 bezeichnete Schienenfahrzeug besteht aus fünf Fahrzeugteilen 2, 3, 4, 5 und 6. Die Fahrzeugteile 2, 4 und 6 verfügen jeweils über ein Drehgestell, wohingegen die Fahrzeugteile 3 und 5 als Sänften ausgebildet sind. Die einzelnen Fahrzeugteile sind durch eine gelenkige Verbindung z. B. durch ein Kugelgelenk (nicht dargestellt) miteinander gekoppelt, was eine Bewegung um drei Freiheitsgrade zulässt. Bei stark verschlissenen Schienenwegen kann es nun vorkommen, dass wenn die einzelnen Fahrzeugteile des Schienenfahrzeugs 1 im Dachbereich im Wesentlichen starr miteinander verbunden sind, dass dann beispielsweise der eine Spuhrkranz des mittleren Drehgestells, also der des Fahrzeugteils 4 aus der Schiene gehoben wird.

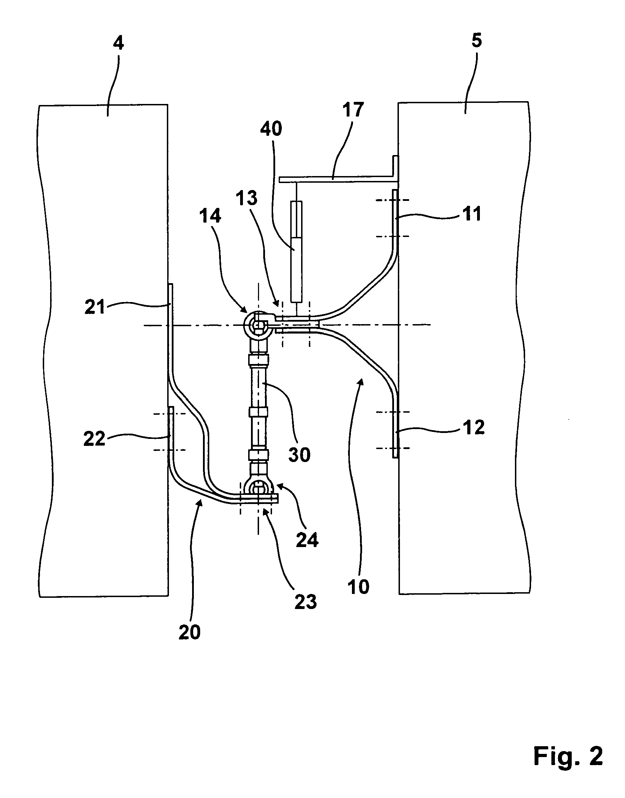

Unter anderen um dies zu verhindern dient die erfindungsgemäße Vorrichtung zur Begrenzung der Wank- und/oder Nickbewegung. Bei der Darstellung gemäß Fig. 2 sind die beiden Fahrzeugteile mit 4 und 5 bezeichnet. An den Stirnseiten der Wagenkästen der Fahrzeugteile 4 und 5 befinden sich die beiden jeweils nach Art einer Blattfeder ausgebildeten Konsolen 10 und 20. Die Konsolen 10 und 20 sind durchaus unterschiedlich ausgebildet; es sei an dieser Stelle allerdings darauf hingewiesen, dass die beiden Konsolen als Konsolenpaar auch gleich ausgestaltet sein können. Welche Konsolenkonstruktion und in welcher Kombination eingesetzt wird, ist abhängig von bestimmten äußeren Bedingungen, wie z. B. dem Federweg. Die Konsole 10 umfasst die beiden Schenkel 11 und 12, die in Draufsicht in etwa trapezförmig gehalten sind. Die beiden Schenkel 11 und 12 sind mit der Stirnseite des Wagenkastens des Fahrzeugteils 5 verschraubt. An ihren freien Enden (Pfeil 13) sind die beiden Schenkel miteinander verbunden. Im Bereich der freien Enden der beiden Schenkel (Pfeil 13) befindet sich ein Kugelgelenk 14 zur dreh- und schwenkgelenkigen Aufnahme des Kuppelarmes 30. Der Kuppelarm 30 ist starr aber in seiner Länge veränderbar, sodass er genau auf den Abstand zwischen dem freien Ende der Konsole 10 und dem freien Ende der Konsole 20 in neutraler Stellung der Fahrzeugteile zueinander einstellbar ist. Die Konsole 20, die ebenfalls ein Kugelgelenk 24 zur verdrehbaren und verschwenkbaren Aufnahme des Kuppelarmes besitzt, weist ebenfalls zwei Schenkel 21 und 22 auf, die an ihrem freien Ende (Pfeil 23) miteinander verbunden sind.

Im vorliegenden Fall bilden die beiden Schenkel 11, 12 bzw. 21, 22 die Blattfeder 10 bzw. 20. Denkbar ist allerdings eine Blattfeder ausschließlich aus einem Schenkel 11 oder 12 oder 21 oder 22 zu bilden. Beide Varianten bilden jeweils eine Konsole, wobei die beiden Konsolen durch den Kuppelarm 30 miteinander verbunden sind.

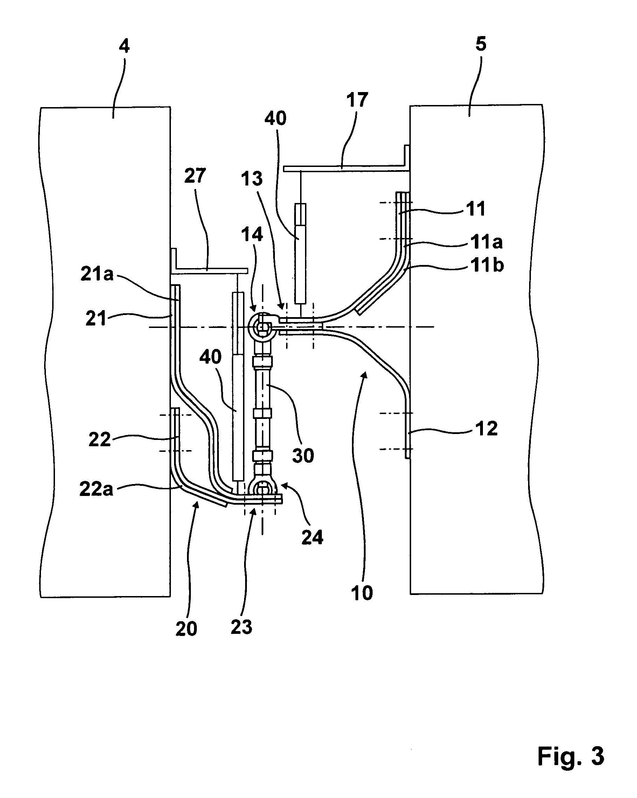

Vorteilhaft weist zumindest eine Konsole 10, 20 einen Dämpfer 40 auf, der vorzugsweise als Kolbenzylinderdämpfer ähnlich einem Stoßdämpfer ausgebildet ist. Der Dämpfer 40 ist mit seinem einen Ende im Bereich des freien Endes der Konsole 10 angelenkt und mit seinem anderen Ende mit dem Wagenkasten des Fahrzeugteiles 5 verbunden, beispielsweise über ein Winkelstück 17. Alternativ oder auch zusätzlich kann die Konsole 20 mit eben einem solchen Dämpfer 40 versehen sein. Das heißt, es können auch beide Konsolen 10, 20 gedämpft sein, wie dies beispielweise in Fig. 3 dargestellt ist.

Die Ausführungsform gemäß Fig. 3 unterscheidet sich im übrigen von der gemäß Fig. 2 dadurch, dass hier die einzelnen Konsolen 10, 20 in Bezug auf einzelne Schenkel 11, 21, 22 durch die Anordnung mehrerer aufeinander liegender blattförmiger Elemente 11 a, 11 b bzw. 21 a und 22a ausgesteift sind, um einen individuellen Kraft/Weg-Verlauf zu ermöglichen. Der Dämpfer 40 im Bereich der Konsole 20 steht durch das Winkelstück 27 mit dem Wagenkasten des Fahrzeugteils 4 in Verbindung. In Bezug auf die Anlenkung des Kuppelarmes ist die Ausbildung gemäß Fig. 3 identisch mit der in Fig. 2 beschriebenen. Der Unterschied zwischen den Figuren 2 und 3 besteht ausschließlich darin, dass bei der Fig. 3 im Gegensatz zu der Fig. 2 einzelne Schenkel der Konsolen versteift sind, während andere gleich geblieben sind, wodurch, wie ausgeführt, spezielle Federkennlinien bereitgestellt werden können.

### Bezugszeichenliste:

- 1: Schienenfahrzeug
- 2: Fahrzeugteil
- 3: Fahrzeugteil
- 4: Fahrzeugteil
- 5: Fahrzeugteil
- 6: Fahrzeugteil
- 10: Konsole
- 11: Schenkel
- 11a: Blattfederelement
- 11b: Blattfederelement
- 12: Schenkel
- 13: Pfeil
- 14: Kugelgelenk
- 17: Winkelstück
- 20: Konsole
- 21: Schenkel
- 21a: Blattfederelement
- 22: Schenkel
- 22a: Blattfederelement
- 24: Kugelgelenk
- 27: Winkelstück
- 30: Kuppelarm
- 40: Dämpfer

## Patentansprüche

1. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander, wobei die Vorrichtung mindestens zwei Konsolen (10, 20) umfasst, wobei jeweils mindestens eine Konsole (10, 20) im Dachbereich eines Fahrzeugteils (2-6) angeordnet ist, wobei die mindestens zwei Konsolen (10, 20) durch einen Kuppelarm (30) miteinander verbunden sind,
**dadurch gekennzeichnet,**
**dass** mindestens eine der Konsolen (10, 20) nach Art einer Blattfeder ausgebildet ist.

2. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach Anspruch 1,
**dadurch gekennzeichnet,**
**dass** die mindestens zwei Konsolen (10, 20) quer zur Mittellängsachse der Fahrzeugteile (2-6) versetzt zueinander an dem jeweiligen Fahrzeugteil (2-6) angeordnet sind.

3. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** die nach Art einer Konsole (10, 20) ausgebildete Blattfeder zur Bildung eines Blattfederpakets mehrere Blattfederelemente (11a, 11b; 21a, 22a) aufweist.

4. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** die nach Art einer Blattfeder ausgebildete Konsole (10, 20) mindestens einen Schenkel (11, 12; 21, 22) aufweist.

5. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** die nach Art einer Blattfeder ausgebildete Konsole (10, 20) mindestens zwei Schenkel (11,12; 21, 22) aufweist, die an ihren freien Enden miteinander verbunden sind.

6. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** der Kuppelarm (30) starr ausgebildet ist.

7. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** der Kuppelarm (30) in der Länge veränderbar ist.

8. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** der Kuppelarm (30) gelenkig mit den beiden Konsolen (10, 20) in Verbindung steht.

9. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der Ansprüche 5 bis 8,
**dadurch gekennzeichnet,**
**dass** die mindestens zwei Schenkel (12, 12; 21, 22), der nach Art einer Blattfeder ausgebildeten Konsole (10, 20), mit ihren freien Enden aneinander anliegen und miteinander verbunden sind.

10. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach einem der voranstehenden Ansprüche,
**dadurch gekennzeichnet,**
**dass** mindestens eine Konsole (10, 20) einen Dämpfer (40) aufweist.

11. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach Anspruch 10,
**dadurch gekennzeichnet,**
**dass** der Dämpfer (40) mit seinem einen Ende im Bereich des freien Endes der Konsole (10, 20) und mit seinem anderen Ende an dem Fahrzeugteil (2-6), das die Konsole (10, 20) aufnimmt, angeordnet ist.

12. Im Dachbereich zweier gelenkig miteinander verbundener Fahrzeugteile (2-6) angeordnete Vorrichtung für Begrenzung der Wank- und/oder Nickbewegung der Fahrzeugteile (2-6) relativ zueinander nach Anspruch 10 oder 11,
**dadurch gekennzeichnet,**
**dass** der Dämpfer (40) als Kolbenzylinderdämpfer ausgebildet ist.

## Claims

1. A device disposed in the roof area of two vehicle parts (2-6) with a jointed connection for limiting the roll and/or pitch motion of the vehicle sections (2-6) relative to each other, wherein the device comprises at least two brackets (10, 20), wherein respectively at least one bracket (10, 20) is disposed in the roof area of a vehicle part (1-6), wherein the at least two brackets (10, 20) are connected to each other by a coupling arm (30),
**characterized in that**
at least one of the brackets (10, 20) is designed in the manner of a leaf spring.

2. The device disposed in the roof area of two vehicle parts (2-6) with a jointed connection for limiting the roll and/or pitch motion of the vehicle sections (2-6) relative to each other according to claim 1,
**characterized in that**
the at least two brackets (10, 20) are disposed on the respective vehicle parts (2-6) so that they are offset transversely to the centre longitudinal axis of the vehicle parts (2-6) relative to each other.

3. The device disposed in the roof area of two vehicle parts (2-6) with a jointed connection for limiting the roll and/or pitch motion of the vehicle sections (2-6) relative to each other according to one of the afore-mentioned claims,
**characterized in that**
the leaf spring designed in the manner of a bracket (10, 20) has several leaf spring elements (11a, 11b; 21a, 22a) so as to form a leaf spring package.

4. The device disposed in the roof area of two vehicle parts (2-6) with a jointed connection for limiting the roll and/or pitch motion of the vehicle sections (2-6) relative to each other according to one of the afore-mentioned claims,
**characterized in that**
the bracket (10, 20) designed in the manner of a leaf spring has at least one limb (11, 12; 21, 22).

5. The device disposed in the roof area of two vehicle parts (2-6) with a jointed connection for limiting the roll and/or pitch motion of the vehicle sections (2-6) relative to each other according to one of the afore-mentioned claims,
**characterized in that**
the bracket (10, 20) designed in the manner of a leaf spring has at least two limbs (11, 12; 21, 22), which are connected to each other at their free ends.

6. The device disposed in the roof area of two vehicle parts (2-6) with a jointed connection for limiting the roll and/or pitch motion of the vehicle sections (2-6) relative to each other according to one of the afore-mentioned claims,
**characterized in that**
the coupling arm (30) is configured to be rigid.

7. The device disposed in the roof area of two vehicle parts (2-6) with a jointed connection for limiting the roll and/or pitch motion of the vehicle sections (2-6) relative to each other according to one of the afore-mentioned claims,
**characterized in that**
the length of the coupling arm (30) is changeable.

8. The device disposed in the roof area of two vehicle parts (2-6) with a jointed connection for limiting the roll and/or pitch motion of the vehicle sections (2-6) relative to each other according to one of the afore-mentioned claims,
**characterized in that**
the coupling arm (30) is articulately connected to the two brackets (10, 20).

9. The device disposed in the roof area of two vehicle parts (2-6) with a jointed connection for limiting the roll and/or pitch motion of the vehicle sections (2-6) relative to each other according to one of the claims 5 to 8,
**characterized in that**
the at least two limbs (11, 12; 21, 22) of the bracket (10, 20) designed in the manner of a leaf spring contact each other with their free ends and are connected to each other.

10. The device disposed in the roof area of two vehicle parts (2-6) with a jointed connection for limiting the roll and/or pitch motion of the vehicle sections (2-6) relative to each other according to one of the afore-mentioned claims,
**characterized in that**
the at least one bracket (10, 20) has a damper (40).

11. The device disposed in the roof area of two vehicle parts (2-6) with a jointed connection for limiting the roll and/or pitch motion of the vehicle sections (2-6) relative to each other according to claim 10,
**characterized in that**
the damper (40) is disposed with its one end in the region of the free end of the bracket (10, 20) and with its other end on the vehicle part (2-6) that receives the bracket (10, 20).

12. The device disposed in the roof area of two vehicle parts (2-6) with a jointed connection for limiting the roll and/or pitch motion of the vehicle sections (2-6) relative to each other according to claim 10 or 11,
**characterized in that**
the damper (40) is designed as a piston-cylinder damper.

## Revendications

1. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, dans lequel le dispositif comporte au moins deux consoles (10, 20), dans lequel respectivement au moins l'une des consoles (10, 20) est montée dans le secteur de la toiture d'un élément de véhicule (2-6), dans lequel les deux consoles (10, 20) sont couplées entre elles par un bras de liaison (30),
**caractérisé en ce que**,
au moins une des consoles (10, 20) est réalisée sous la forme d'un ressort plat.

2. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon la revendication 1,
**caractérisé en ce que,**
lesdites au moins deux consoles (10, 20) sont décalées l'une par rapport à l'autre transversalement à l'axe central des éléments de véhicules (2-6) et montées sur les éléments de véhicules (2-6) respectifs.

3. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
ledit ressort plat réalisé sous forme d'une console (10, 20) sert à constituer un paquet de ressorts plats comportant plusieurs éléments de ressort plat (11a, 11b; 21a, 22a).

4. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
ladite console (10, 20) sous forme d'un ressort plat comporte au moins une branche (11, 12 ; 21, 22).

5. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
ladite console (10, 20) sous forme d'un ressort plat comporte au moins deux branches (11, 12; 21, 22) qui sont couplées à leur extrémité libre.

6. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
le bras de liaison (30) est rigide.

7. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
le bras de liaison (30) peut être ajusté en longueur.

8. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
le bras de liaison (30) est couplé aux deux consoles (10, 20) de façon articulée.

9. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications 5 à 8,
**caractérisé en ce que,**
lesdites au moins deux branches (11, 12 ; 21, 22) de ladite console (10, 20) en forme de ressort plat, sont juxtaposées par leur extrémité libre et couplées entre elles.

10. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications précédentes,
**caractérisé en ce que,**
au moins une des consoles (10, 20) comporte un amortisseur (40).

11. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon la revendication 10,
**caractérisé en ce que,**
l'amortisseur (40) est monté, par l'une de ses extrémités dans le secteur de l'extrémité libre de la console (10, 20) et avec son autre extrémité à l'élément de véhicule (2-6), qui prend en charge la console (10, 20).

12. Dispositif disposé dans le secteur de la toiture de deux éléments de véhicules (2-6) articulés entre eux pour limiter le mouvement de pivotement et de basculement des éléments de véhicules (2-6) relativement l'un par rapport à l'autre, selon l'une des revendications 10 ou 11,
**caractérisé en ce que,**
l'amortisseur (40) est constitué par un amortisseur à piston et cylindre.
